Europäisches Patentamt

European Patent Office

Office européen des brevets

(19)

(11) Publication number : **0 637 510 A1**

(12) **EUROPEAN PATENT APPLICATION**

(21) Application number : **94305848.7**

(22) Date of filing : **05.08.94**

51 Int. Cl.⁶ : **B32B 5/28,** B29C 70/10

(30) Priority : **05.08.93 JP 194734/93**

(43) Date of publication of application :
**08.02.95 Bulletin 95/06**

(84) Designated Contracting States :
**DE FR GB IT**

(71) Applicant : **MITSUI TOATSU CHEMICALS, Inc.**
**2-5 Kasumigaseki 3-chome**
**Chiyoda-Ku Tokyo 100 (JP)**

(72) Inventor : **Sakai, Hideo**
**967-1-616, Kashiwagaya**
**Ebina-shi, Kanagawa-ken 243-04 (JP)**
Inventor : **Masuda, Misao**
**557 Takakura**
**Fujisawa-shi, Kanagawa-ken 252 (JP)**
Inventor : **Maruko, Chiaki**
**2-31 2882 Iijima-cho,**
**Sakae-ku**
**Yokohama-shi, Kanagawa-ken 244 (JP)**

(74) Representative : **Nicholls, Kathryn Margaret et**
**al**
**MEWBURN ELLIS**
**York House**
**23 Kingsway**
**London WC2B 6HP (GB)**

(54) **Prepreg and laminate structure.**

㊄   The present invention provides prepregs in which thermoplastic resin has been impregnated into the continuous fibers aligned in one direction on a plane and at least one layer of porous and flexible reinforcing sheet has been placed in firm contact with the obtained fiber/resin composite having a continuous fiber content of 40 - 80 % by volume.

According to the present invention, partial unevenness in strength can be prevented. Three-dimensional shaping can be carried out without impairing strength. Further, weight per unit surface can be reduced as required without impairing desirable performance characteristics. In addition, the materials of the invention can be bonded with other materials without applying any special surface treatment.

*FIG.2*

EP 0 637 510 A1

This invention relates to a fiber-reinforced thermoplastic resin prepreg. Such a prepreg is, desirably, light in weight, excellent in both mechanical strength and forming characteristics and is in particular for use in the fields of automobile components such as bumper back-up beams, door beams, sheet shells, interior cell materials, and door trims; and construction materials such as concrete frames and temporary scaffolding structures for workers and the like, mechanical components such as mechanism members, covers and the like. The present invention also relates to a laminated structure and a formed article using said prepreg and methods for the production of the same.

In the prior art, such large-sized resin articles have been produced by forming fiber-reinforced thermosetting resins to a desired shape.

However, the thermosetting resins are such lower molecular weight polymers that they smell like a styrene monomer in the production processes when they are unsaturated polyester resins and they smell like amines when they are epoxy resins. Such odors pose noxious problems to humanbodies.

Further, during prepreg-stacking operation, resin layers and fiber layers are likely to slide from their right place to form wrinkles since they are not fully integrated. Thus, the forming process of this material requires considerable skills. A considerable length of time is required to complete curing of the formed articles. This method of forming articles, therefore, requires skilled labors and environmental protection measures, resulting in higher production costs.

Therefore, for the past years, an attempt has been made to manufacture articles using more easily treatable thermoplastic resin.

Generally, those articles formed using thermoplastic resin are prepared by heating laminate structures to a resin softening or fluidal temperature or higher and then stamping the softened laminate structures in a compression mold for a final article. Said laminate structures can be formed by stacking a plural of fiber-reinforced resin sheets, while changing their fiber directions successively, that have been obtained by impregnating thermoplastic resin into the continuous fibers oriented in one direction on a plane, and heating and compressing simultaneously.

However, those conventional fiber-reinforced thermoplastic resin articles tend to have a non-uniform distribution of mechanical strength even when the articles are virtually of a shape of plane because the continuous fibers used for enhanced strength are likely to be distorted in the molten thermoplastic resin. Further, when these articles should be formed for a three-dimensional shape, the fibers are difficult to follow the bending of the article and are likely to be distorted in the articles because such reinforcing fibers are continuous. Accordingly, there has been found such a unpleasant phenomenon as linearity is impaired in the product. In this case, strength naturally decreases in those parts where fibers are distorted and hence there is a problem that such fiber-reinforced thermoplastic resin composites can not be used for articles having a three dimensional shape. Alternatively, another measure can be used for supplement of reduced strength as required in which the number of prepreg laminate layers are increased in those parts where the fibers are disordered for purposes of attempting to strengthen such parts, but this measure is certainly not desirable because it is going against a trend of the present time when lightweight articles are welcomed.

Further, in order to make the weight of articles light as required, the continuous fibers in prepregs can be decreased by taking a wider fiber spacing. This measure, however, has such various disadvantages including crack formation in a longitudinal direction along the length of continuous fibers during applications and production processes as well, and reduction in prepreg yields.

In addition, when the formed article should be bonded with other materials using adhesives, the surface of the article is so smooth that mere application of the adhesives is difficult to obtain a good affinity with the article surface. Therefore, sanding, etching and other surface treatment are necessary before any adhesives is applied to bonding. This kind of preliminary step undoubtedly increases production costs.

Embodiments of the present invention desirably obviate the above-mentioned problems of the prior art and provide novel prepregs which have an even distribution of mechanical strength, maintain stable strength even when formed to a three-dimensional shape, permit the weight per unit area to be decreased, and enable other materials to be bonded without any special surface treatment. Embodiments of this invention desirably also provide laminate structures and articles using said prepregs.

According to the invention there is provided a prepreg comprising at least one fiber-reinforced resin sheet obtained by impregnating thermoplastic resin into the continuous fibers aligned in one direction on a plane and at least one layer of porous and flexible reinforcing sheet which was laminated with said at least one fiber-reinforced resin sheet.

Preferably, aligned continuous fibers are placed between reinforcing sheets so that the fibers can be held freely without changing their relative arrangement, and hence the fibers can follow the three-dimensional contour without distorting the fibers during molding operation. Thus, uneven distribution of mechanical strength in the article to be formed can be prevented to make it possible to form a desired three-dimensional product without impairing its mechanical strength. Further, wider spacing between continuous fibers would not impair ease of handling prepregs since the fibers are constrained by the reinforcing sheets and enables weight per unit area to be lighter. In addition, the reinforcing sheets are porous to allow adhesives to be retained on the exposed surface of the sheets without any special surface treatment, it is possible to bond prepregs with other materials.

Embodiments of the invention are described below by way of example only.

The prepreg of the present invention may be manufactured by firstly impregnating thermoplastic resin into the continuous fibers aligned in one direction on a plane to form fiber-reinforced resin sheets and secondly placing a reinforcing sheet in firm contact with at least one side of said fiber-reinforced resin sheets.

The thermoplastic resins according to the present invention include polystyrene polypropylene, polyethylene, AS resins, ABS resins, ASA resins (polyacrylonitrile, polystyrene, polyacrylic ester), polymethylmethacrylate, nylon, polyacetal, polycarbonate, polyethylene terephthalate, polyphenylene oxide, polyether ketone, polyether ether ketone, polyimide, polyarylate and the like.

The continuous fibers may be obtained by bundling monofilaments using bundling agents. The continuous fibers of the present invention preferably employ monofilaments, 100 - 20, 000 of which are bundled into a continuous fiber. The bundling or dressing agent should be selected depending on the thermoplastic resins to be used. In general, the bundling agent should soften at the melting temperature of the thermoplastic resin and also should be easily impregnated into the continuous fibers. Thus, the main components of the bundling agent are often the same type of resin as the thermoplastic resin to be used.

Typical raw materials of the monofilaments are glass fibers, carbon fibers, aramid fibers, silicone carbide fibers and the like.

When glass fibers are used as monofilaments for continuous fibers, various surface treatments may be applied on the surface of the fiber to provide a high affinity or fitness between the fiber and the thermoplastic resin. The surface treatment is applied using a combination of bundling agents and coupling agents.

The coupling agents include those derived from silanes, titanates, and zirconium. An optimum coupling agent should be selected depending on the types of thermoplastic resin to be used.

When the thermoplastic resin is either nylon resin or polycarbonate resin, suitable coupling agents to be used include $\gamma$-aminopropyl-trimethoxysilane, N-$\beta$-(aminoethyl)-$\gamma$-aminopropyltrimethoxysilane and the like.

Also, when the thermoplastic resin is polyethylene terephthalate or polybutylene terephthalate, suitable coupling agents to be used include $\beta$-(3,4-epoxycyclohexyl) ethyl-trimethoxysilane, $\gamma$-glydoxypropyl-trimethoxysilane, $\gamma$-aminopropyl-trimethoxy silane and the like.

Also, when the thermoplastic resin is polystyrene or polypropylene, suitable coupling agents to be used include N-($\beta$-aminoethyl) -$\gamma$-aminopropylmethyl-dimethoxysilane, vinyltrimethoxysilane, vinyl-tris-(2-methoxyethoxy) silane, $\gamma$-methacryloxypropyltrimethoxysilane and the like.

Furthermore, when the thermoplastic resin is polyphenylene oxide, polyphenylene sulfide, polysulfone, polyethersulfone, polyether ketone, polyetherether ketone, polyimide, polyarylate or fluoro-resin, the above-mentioned coupling agents can be used, and in addition there can be used N-($\beta$-aminoethyl) - $\gamma$-amino propylmethyl-dimethoxysilane, $\gamma$-cyclopropyl methyl dimethoxysilane, $\gamma$-mercaptopropyltrimethoxysilan e, P-amino phenyltriethoxysilane and the like.

In the case where monofilaments other than glass fibers are used as monofilaments in the continuous fibers, amine-curing types of epoxy resin are aften used as coupling agents, which include bisphenol-A-epichlorohydrine resins, epoxynovolac resins, ali-cyclic epoxy resins, aliphatic epoxy resins, and glycydil-ester type resins.

However, in the case where there are used thermoplastic resins having higher melting temperatures, those coupling agents may thermally decompose. Hence, in this case no surface treatment may be applied to the monofilaments contained in the continuous fibers.

Procedures for applying coupling agents to the surface of a monofilament are as follows:

One procedure comprises drawing monofilaments from molten materials of fibers, spraying over the monofilaments, while being drawn, an aqueous solution made of bundling agents, coupling agents, and suitable surfactants, and drying the wet filaments at temperatures of about 100°C.

Another procedure comprises impregnating fully monofilaments with a solution in which 0.1-3 % by weight bundling and coupling agents are dissolved by means of immersion, spray and other suitable methods, and then drying said wet filaments at a temperature of 60-120 °C for a period of time requiring the solvent to fully evaporate, for example, about 15 to 20 minutes to complete reactions between the coupling agents and the surface of the monofilaments.

Solvents for dissolving coupling agents may be selected, depending on the types of coupling agents, and from water adjusted pH 2.0 - 12.0, ethanol, toluene, acetone, xylene, and other organic solvents. These solvents can be used alone or in combination.

In order to efficiently impregnate thermoplastic resins into continuos fibers, it is necessary to align continuos fibers so as not to overlapped each other, thus attaining the shortest distance through which melted thermoplastic resins permeate. Hence, it is preferable that continuous fibers be oriented on a plane so that they are not overlapped each other.

In such processing steps where thermoplastic resins are heated, melted, impregnated into continuous fibers, degassed, and then cooled, a higher viscosity of the molten resin retards impregnation. Thus, it is often necessary to decrease the production line speed. An extremely high viscosity of the molten resin would prohibit even impregnation. On the other hand, a lower viscosity of the molten resin allows the resins to be impregnated into the fibers at a higher speed, but excessive resin fluidity prevents resin from adhering to the fiber. Thus, prepregs which have a higher fiber content required for higher mechanical strength can hardly be produced by means of low-viscosity molten resin. Also, the lower viscosity molten resin has a lower molecular weight, and displays poor resin performance which can be attributed to impair physical properties of the prepreg laminate. In view of the above-mentioned discussions, the melt viscosity of molten resin preferably ranges 1000 poises to 5000 poises at a share rate of 1/ sec - 100/ sec. If the thermoplastic resins are soluble in a solvent, then they can be dissolved in the solvent for a solution, which is then impregnated into the continuous fibers, followed by removal of solvent while being degassed. However, this method is applicable only to such resins that can be dissolved in a solvent, and accordingly can not accommodate to all types of resin.

If a continuos fiber content of fiber-reinforced sheets is too low, then the strength of the fiber-reinforced sheet becomes lower. On the other hand, if the fiber content is too high, then the strength of the fiber-reinforced sheet also becomes lower since affinity or close adhesion between thermoplastic resin and continuos fiber decreases. Therefore, preferably, the continuos fiber content of fiber-reinforced sheets ranges 40 to 80 % by volume.

The fiber-reinforced sheets thus produced have a good affinity between thermoplastic resin and continuous fiber. Said fiber-reinforced sheets have a continuos fiber content of 40 - 80 % by volume, which can be changed as required, and a thickness of 0.1 mm to 0.6 mm can be obtained.

The fiber-reinforced sheet whose continuous fibers are oriented in one direction and are impregnated with thermoplastic resin can be manufactured by aligning a plural of continuous fibers parallel to each other and then impregnating molten thermoplastic resin therein.

During such steps of the manufacturing process, variation of operation conditions are likely to increase distances between adjacent continuous fibers that have been previously fully oriented, this leading to longitudinal cracks along the affected part of continuous fibers. Those longitudinal cracks will unquestionably reduce product yields. As a counter-measure against the above-mentioned problem, it has been found to be effective to constrain the continuous fibers contained in fiber-reinforced resin sheets by means of a porous reinforcing sheet. This measure can avoid such partial longitudinal cracks and can prevent reduction in product yields.

Further, for purposes of manufacturing light-weighted fiber-reinforced sheets, either the number of continuous fibers or the number of bundled monofilaments in a continuous fiber can be reduced. However, the reduced number of fibers are likely to cause longitudinal cracks along the affected part of fibers, this leading to a decrease in product yields. As a counter-measure against this problem, it has been found to be effective to constrain continuous fibers of a fiber-reinforced resin sheet with a porous reinforcing sheet. It should be noted that the continuous fibers are aligned in one direction in the fiber-reinforced resin sheet, and hence the composite sheet has the largest mechanical strength in the very direction in which the fibers are oriented. Thus, as far as the required number of continuous fibers are contained in such a direction requiring the strength of a final article, the final article to be produced will have a greater mechanical strength.

Hence, it is not always necessary that such fiber-reinforced sheet is constructed in such a manner that adjacent fibers are aligned in contact with each other. As far as the required number of fibers are present in the final article even if adjacent fibers are aligned with different pitches, a greater mechanical strength can be accomplished. Thus, any fiber-reinforced sheets having longitudinal cracks or any fiber-reinforced sheets having various parts that contain continuous fibers constrained to each other but with different pitches can be used as long as such sheets are at least handleable. In other words, any types of fiber alignment, for example, adjacent fibers aligned with a zero pitch or fibers that contact with each other, and those aligned apart from each other or those that do not contact with each other can be used with ease, provided that fiber-reinforced sheets are constrained with porous reinforcing sheets so that fibers are orderly aligned in such a way that pitches between each fiber bundle are kept constant. In this case, the prepregs thus manufactured can maintain an integral form of sheet, poses no handling problem, provide the same operating capability as conventional fiber-reinforced sheets. Thus, prepregs that contain the number of continuous fibers as matched for performance of the final article can be used with ease. Therefore, by means of porous reinforcing sheets, many advantages can be accomplished that include prevention of product yield reduction due to longitudinal cracks of prepregs, and ease of production of prepregs matched with performance requirements. Thus, a distance between adjacent fibers may be from 0 (both fibers contact with each other) to 100 mm, preferably 0 to 70 mm, more preferably 0 to 50 mm, and most preferably 0 to 30 mm.

Further, when continuous fibers are oriented with a distance between two adjacent fibers or a fiber-alignment spacing of 100 mm or less, it is naturally basic to align fibers with a constant pitch or distance between each other. Alternatively, units of fiber-reinforced sheet having fibers aligned with adjacent fibers contacting with each other can be prepared first, and then said units can be arranged so that a distance between adjacent units is less than 100 mm. Furthermore, various units having different numbers of fibers can be aligned with an appropriate spacing. In addition, configuration of continuous fibers as well as their spacing can be changed depending on the objects to be attained.

The porous reinforcing sheet to be arranged on the surface of the fiber-reinforced resin sheet may have such forms that molten prepreg resins can permeate thereinto, for example non-woven fabrics, woven fabrics, mat, nets, punching films, punching metals and the like.

Materials of said porous reinforcing sheet include synthetic resin fibers; metallic fibers such as titan, boron, stainless steel, iron and the like; inorganic fibers such as glass, carbon, silicone carbide and the like; natural fibers such as paper, pulp and the like, but are not limited to these materials. Any materials that are porous, flexible, sufficient in strength, less costly, and available in a large quantity can be used for the reinforcing sheet and can be selected depending on uses of product.

The reinforcing sheet desirably has preferably such a thickness that enables molten prepreg resin to permeate, usually in the range of 0.01 mm to 1 mm.

Upon compressing the reinforcing sheet to the fiber-reinforced resin sheet with molten resin, the molten resin will permeate into the reinforcing sheet so that the reinforcing sheet becomes an integral part of the fiber-reinforced resin sheet, thus providing the prepreg of the present invention.

In this instance, if the reinforcing sheet melts at a melt temperature of the resin contained in the fiber-reinforced resin sheet, a part of the reinforcing sheet also melts to combine with said resin, leading to a stronger integration.

When laminate structures of the present invention is manufactured, a plural of prepregs closely joined with the reinforcing sheet of the present invention are stacked in such a way that fiber orientations of continuous fibers are changed successively by a certain angle, and then heated and compressed for the final product. Alternatively, as required, the prepreg of the present invention can be combined with conventional prepregs, that is, fiber-reinforced resin sheets in which thermoplastic resin has been impregnated into the continuous fibers oriented in one direction on a plane, which will be referred to as prepreg 1 hereinafter, and then can be stacked, heated and compressed within the extent the effects of the present invention are not impaired for the final laminate structure.

In addition, other materials such as decorative surface materials made of raw materials capable of being integrally combined with the molten resin may be arranged and laminated on one side of the fiber-reinforced resin sheet, followed by heating and compression for the final product. Such decorative surface materials may be exemplifed by resin films such as polypropylene and polystyrene, resin sheets or foams, leather-pattern embossed polyvinyl chloride sheets, leather-pattern embossed polyvinyl chloride sheets backed with soft polyurethane foams, fabrics or non-woven fabrics, materials with fibers on the surface such as felt, but are not limited to these materials.

Prepregs of the present invention are manufactured by stacking a plural of sheets while alternating directions of continuous fibers, which is then heated for the resin to be a molten state, followed by forming while cooling at a low pressure of 3 kg/cm$^2$ or less.

If it is desired to obtain glossy surface by molten resin on the surface of a laminate plate, lamination is carried out in such a manner that the reinforcing sheet is kept beneath the surface. Further, in the case where other materials are adhered to the surface of a laminate, lamination is carried out in such a manner that a reinforcing layer becomes a surface of the laminate structure for purposes of providing an adhesive-holding layer.

In addition, there is a laminate in combination of the conventional prepreg 1 and the present invention prepreg, in which the reinforcing layer can be either on or beneath the surface of the laminate depending on the objects to be attained. Furthermore, it is also possible to accomplish the same effects as the prepreg laminates joined with the reinforcing sheet of the present invention by stacking alternatingly the prepreg 1 in which thermoplastic resin has been impregnated into continuous fibers oriented in one direction on a plane and the reinforcing sheet of the present invention.

In those laminate plates as stacked and formed according to the above-mentioned method, the fibers aligned in one direction are often placed between reinforcing sheets so that the fibers are constrained by the reinforcing sheets. Thus, fiber orientation is not likely distorted by resinous flow, providing laminate plates with uniform strengths all over the plate surface. In addition, in the case of forming a three-dimensional laminate, the fibers aligned in one direction are separated into each layer by means of the reinforcing sheets so that each layer of fibers are allowed to slide over other layer so as to contour along the three-dimensional shape. Hence, articles of a three-dimensional shape can be obtained without creases or partial overlapping of fibers.

Some methods of forming articles will be described hereinafter.

In order to form laminate structures having a desired shape, prepreg laminates are heated in an oven or a heating plate to a temperature higher than the resin fluidal temperature and charged into a mold. The mold plate is heated to a temperature not more than the glass transition temperature of the laminate if the glass transition temperature of resin of the laminated is not less than 30°C or the mold plate is maintained at ambient temperature if the glass transition temperature is less than 30°C. Then, the mold is compressed in a short time for stamping where shaping, degassing and cooling processes are simultaneously conducted.

Other methods of forming laminate structures include the compress process where laminates are charged into a press mold which is being heated to a temperature higher than the resin fluidal temperature, compressed at a pressure of 1 -300 kg/cm$^2$ based on the surface of the final product for a period of time of 10 seconds to 60 minutes, cooled to a temperature less than the glass transition temperature of the resin, and then removed from the mold, and the autoclave forming process where laminates are charged into a mold, heated to a temperature higher than the resin-flowing temperature under vacuum, compressed at a pressure of 20 kg/cm$^2$ or less for shaping and degassing, cooled to ambient temperature, and then removed from the mold.

During these steps of processing, as required, the above-mentioned laminate may be placed in firm contact with prepreg 1 or a decorative surface material so as to be combined as an integral material.

The resin fluidal temperature or the temperature at which resin starts to soften or flow is, for example, 210°C for polystyrene, polypropylene, polyethylene, AS resins, ABS resins, ASA resins (polyacrylonitrile, polystyrene, polyacrylic ester), polymethyl methacrylate, nylon, polyacetal; 230°C for polyethylene terephthalate and fluoro resins; 250°C for polyphenylene oxide; 270°C for polycarbonate; 230°C for polyphenylene sulfide and polysulfone; 360°C for polyether sulfone; 370°C for poly(ether ether ketone); 390°C for poly(ether ketone); 390°C for polyimide and polyarylate.

In the accompanying drawings:

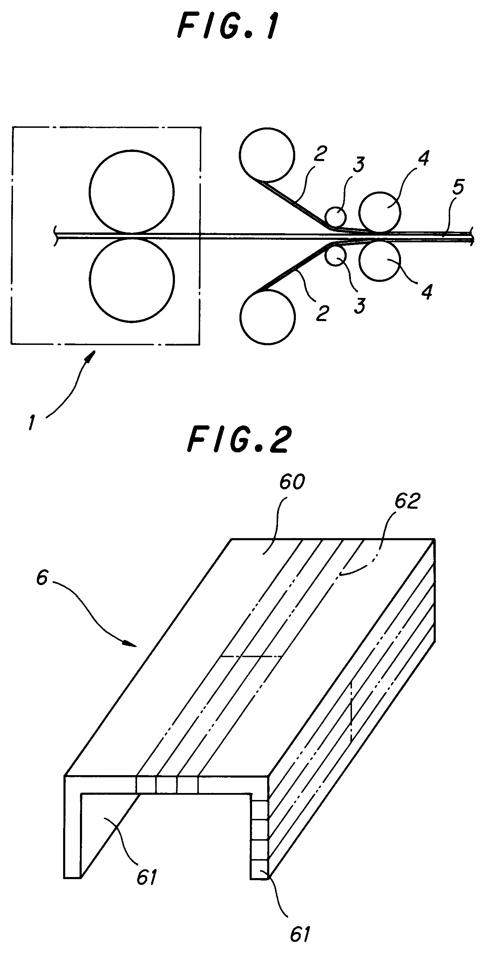

Figure 1 is a schematic view showing an example of methods for manufacturing prepregs of the invention, and Figure 2 is a perspective view showing an example of an article of a laminate structure of this invention.

Referring to the drawings, reference numeral 1 shows a prepreg manufacturing apparatus as disclosed in Japanese Laid-open Patent Publication No. 61-229535/1986. A pair of continuous belts, one placed over the other, are passed through opposing 3 sets of heat rolls. Between the belts, molten thermoplastic resin is impregnated into the continuous fibers that have been oriented in one direction on a plane. Reference numeral 2 shows a reinforcing sheet pulled out of the rolls. Reference numeral 3 shows a guide roll that guides the reinforcing sheet 2 close to the fiber reinforced sheet. Reference numeral 4 is a press roll that presses the reinforcing sheet 2 to the molten fiber-reinforced sheet and afterwards cools the materials thus joined. Reference numeral 5 indicates the prepreg that has been joined with the reinforcing sheets. Reference numeral 6 shows a laminate structure product having an inverted U shape cross section formed using the prepreg of the present invention which has two parallel side walls 61 and a connecting plate 60 that connects said side walls. Reference numeral 62 is a cutting line to show how specimens for use in the measurement of strengths is cut off.

Further, the apparatus shown in Fig. 1 can be used for integrating the fiber-reinforced resin with reinforcing sheets 2. In Fig. 1 as described above, the prepreg manufacturing apparatus 1 is operated in such a way that resin is impregnated between a pair of continuous belts, one placed over the other, that are passed through opposing 3 sets of heat rolls. Alternatively, another method has been known to the prior art in which molten thermoplastic resin is impregnated into the continuous fibers that have been oriented in one direction on a plane between a pair of heat rolls, one placed over the other while excessive resin is squeezed out of the rolls.

The apparatus can be operated using glass as a material for continuous fibers of prepreg. as described in the following. First, surface treatment with $\gamma$ -methacryloxy-propyltrimethoxysilane is applied to glass monofilaments having a diameter of 13 micro-meters, 1,600 of which are bundled to form a yarn. A single yarn, which is used per 2 mm wide prepreg, is pulled with a uniform tension to be aligned in one direction, and placed in contact with molten thermoplastic resin to be impregnated with resin while the excessive resin is squeezed with heat rolls for the production of a fiber-reinforced resin sheet. Then, reinforcing sheets 2 are supplied via the guide roll 3 to the fiber-reinforced resin sheet so as to be bonded to both surfaces of the fiber-reinforced resin sheet. Subsequently, the press roll 4 presses the reinforcing sheet 2 to the fiber reinforced resin sheet and cools the material to obtain the final prepreg.

Note that in Fig. 1 the reinforcing sheet 2 is adapted to be pressed to both surfaces of the fiber reinforced resin sheet oriented in one direction. However, only one surface of the fiber reinforced resin sheet may be placed in contact with the reinforcing sheet and pressed with it as the case may be.

The apparatus can also be operated using carbon fibers as monofilaments in which carbon monofilaments having a diameter of 7 micro-meters, 12,000 of which are bundled to form a yarn are used for prepreg, which is then integrated with reinforcing sheets 2 according to the above-mentioned method.

The performance of prepreg of the present invention and laminate articles produced using the prepreg of the present invention will be explained in detail hereinafter with reference to the following examples and comparison examples.

It should be noted that the fiber reinforced resin sheets obtained by impregnating thermoplastic resin into the continuous fibers oriented in one direction as used in the following comparison examples are the same as the fiber reinforced resin sheets of this invention except for whether the reinforcing sheet 2 is provided or not.

## EXAMPLE 1

The surface treatment with $\gamma$-methacryloxy-propyl trimethoxysilane was applied to glass monofilaments having a diameter of 13 micro-meters. 1,600 of which were bundled to form a yarn. The required number of yarns were pulled with a uniform tension to be aligned in one direction so that adjacent yarns did not overlap each other but stay in contact with each other, and impregnated with molten polypropylene (PP) resin at 240°C to produce prepreg. While said prepreg was in a molten state, the polyethlene terephthalate (PET) nonwoven fabric weighing 10 g/m$^2$ used as reinforcing sheets were placed in firm contact with the one surface of said prepreg in an apparatus as shown in Fig. 1 to produce the final prepreg having a fiber content of 50 % by volume and weighing 350 g/m$^2$ which is referred to as prepreg A hereinafter.

The prepreg A was then cut off to obtain a specimen 10 meters in length and was inspected whether or not longitudinal cracks along fibers occurred on the prepreg. Testing of handleability was also conducted.

Structure of prepreg A and results of the above tests are shown in Table 1. It was found that there existed no longitudinal cracks on prepeg A. No handling problems were posed.

## EXAMPLE 2

Glass yarns treated as the same as in Example 1 were used according to the same method as in Example 1 to produce prepreg B having a fiber content of 50 % by volume and weighing 250 g/m$^2$.

The prepreg B was then inspected whether or not had occurred on the prepreg longitudinal cracks along fibers. Testing of handleability was also conducted.

Structure of prepreg B and results of the above tests are shown in Table 1. It was found that there existed no longitudinal cracks on prepeg B. No handling problems were posed.

## EXAMPLE 3

Glass yarns treated as the same as in Example 1 were used according to the same method as in Example 1 to produce prepreg C having a fiber content of 50 % by volume and weighing 200 g/m$^2$.

The prepreg C was then inspected whether or not had occurred on the prepreg longitudinal cracks along fibers. Testing of handleability was also conducted.

Structure of prepreg C and results of the above tests are shown in Table 1. It was found that there existed no longitudinal cracks on prepeg C. No handling problems were posed.

## EXAMPLE 4

Glass yarns treated as the same as in Example 1 were used according to the same method as in Example 1 to produce prepreg D having a fiber content of 50 % by volume and weighing 100 g/m$^2$.

The prepreg D was then inspected whether or not longitudinal cracks along fibers occurred on the prepreg. Testing of handleability was also conducted.

Structure of prepreg D and results of the above tests are shown in Table 1. It was found that there existed no longitudinal cracks on prepeg D. No handling problems were posed.

## EXAMPLE 5

Using the same method as in Example 1 except that adjacent yarns were oriented with a spacing of 5 mm, polyethlene terephthalate (PTF) non-woven fabrics weighing 10 g/m$^2$ as used reinforcing sheets were placed in firm contact with the one surface of said prepreg in an apparatus as shown in Fig. 1 to produce the final prepreg having a fiber content of 50 % by volume and weighing 50 g/m$^2$ which was referred to as prepreg E.

The prepreg E was then cut off to obtain a specimen 10 meters in length and was inspected whether or not there existed longitudinal cracks along fibers.

Structure of prepreg E and results of the above tests are shown in Table 1. It was found that there existed no longitudinal cracks on prepeg E. No handling problems were posed.

EXAMPLE 6

Using the same method as Example 1 except for the reinforcing sheets, there was produced prepreg F having a fiber content of 80 % by volume and weighing 250 g/m$^2$.

The prepreg E was then cut off to obtain a specimen 10 meters in length and was inspected whether or not there existed longitudinal cracks along fibers.

Structure of prepreg F used in the tests and results of the above tests are shown in Table 1. It was found that there existed no longitudinal cracks on prepeg F.

EXAMPLE 7

Using the same procedure as Example 1 except for the reinforcing sheets, there was produced prepreg G having a fiber content of 40 % by volume and weighing 250 g/m$^2$.

The prepreg G was then cut off to obtain a specimen 10 meters in length and was inspected whether or not there existed longitudinal cracks along fibers.

Structure of prepreg F used in the tests and results of the above tests are shown in Table 1. It was found that there existed no longitudinal cracks on prepeg G.

EXAMPLE 8

Using the same procedure as Example 3 except that 6-nylon (PA6) was used instead of PP as thermoplastic resin, there was produced prepreg H.

The prepreg H was then cut off to obtain a specimen 10 meters in length and was inspected whether or not there existed longitudinal cracks along fibers.

Structure of prepreg H used in the tests and results of the above tests are shown in Table 1. It was found that there existed no longitudinal cracks on prepeg H.

EXAMPLE 9

Using the same procedure as Example 3 except that PA6 nets were used instead of PET as reinforcing sheets, there was produced prepreg I, which was then cut off to obtain a specimen 10 meters in length and was inspected whether or not there existed longitudinal cracks along fibers.

Structure of prepreg I used in the tests and results of the above tests are shown in Table 1. It was found that there existed no longitudinal cracks on prepeg I.

EXAMPLE 10

Using the same procedure as Example 3 except that sheets of paper pulp weighing 20 g/m$^2$ was used instead of PET non-woven fabrics as reinforcing sheets. there was produced prepreg J, which was then cut off to obtain a specimen10 meters in length and was inspected whether or not there existed longitudinal cracks along fibers.

Structure of prepreg J used in the tests and results of the above tests are shown in Table 1. It was found that there existed no longitudinal cracks on prepeg J.

EXAMPLE 11

Using the same procedure as Example 3 except that nets of stainless steel weighing 360 g/m$^2$ were used instead of PET non-woven fabrics as reinforcing sheets, there was produced prepreg K, which was then cut off to obtain a specimen10 meters in length and was inspected whether or not there existed longitudinal cracks along fibers.

Structure of prepreg K used in the tests and results of the above tests are shown in Table 1. It was found that there existed no longitudinal cracks on prepeg K.

## EXAMPLE 12

Using the same procedure as Example 3 except that the resin melting temperature of 400°C , carbon fibers as monofilaments, polyether ether ketone(PEEK) as resin, and carbon fiber mats weighing 30 g/m$^2$ as reinforcing sheets were used, there was produced prepreg L, which was then cut off to obtain a specimen 10 meters in length and was inspected whether or not there existed longitudinal cracks along fibers.

Structure of prepreg L used in the tests and results of the above tests are shown in Table 1. It was found that there existed no longitudinal cracks on prepeg L.

## EXAMPLE 13

A surface finish plate in which a surface decorating material has been joined with one surface of polyurethane foam sheets was bonded to one surface of prepreg A of Example 1 to produce prepreg M, which was then cut off to obtain a specimen 10 meters in length and was inspected whether or not there existed longitudinal cracks along fibers.

Structure of prepreg M used in the tests and results of the above tests are shown in Table 1. It was found that there existed no longitudinal cracks on prepeg M.

## EXAMPLE 14

Using the same procedure as Example 1 except [that the same] reinforcing sheet was joined with both surfaces of the fiber-reinforced resin sheets to produce the final prepreg N. To the one surface of prepreg N was bonded PET weighing 10 g/m$^2$ while PA6 non-woven fabric weighing 20 g/m$^2$ was adhered to the other surface of the prepreg N, which was then cut off to obtain a specimen 10 meters in length and inspected whether or not there existed longitudinal cracks along fibers.

Structure of prepreg N used in the tests and results of the above tests are shown in Table 1. It was found that there existed no longitudinal cracks on prepeg N

## COMPARISON EXAMPLE 1

The same procedure as Example 1 was used to produce prepreg O weighing 350 g/m$^2$ except that the reinforcing sheet was not used, and the prepreg O was then cut off to obtain a specimen 10 meters in length and was inspected whether or not there existed longitudinal cracks along fibers.

Structure of prepreg O used in the tests and results of the above tests are shown in Table 1. It was found that there existed no longitudinal cracks on prepeg O.

## COMPARISON EXAMPLE 2

The same procedure as Example 3 was used to produce prepreg P weighing 200 g/m$^2$ except that the reinforcing sheet was not used, and the prepreg P was then cut off to obtain a specimen 10 meters in length and was inspected whether or not there existed longitudinal cracks along fibers.

Structure of prepreg P used in the tests and results of the above tests are shown in Table 1. It was found that there existed no longitudinal cracks on prepeg P.

## COMPARISON EXAMPLE 3

The same procedure as Example 5 was used to produce prepreg Q weighing 50 g/m$^2$ except that the reinforcing sheet was not used, and the prepreg Q was then cut off to obtain a specimen 10 meters in length and inspected whether or not there existed longitudinal cracks along fibers.

Structure of prepreg Q used in the tests and results of the above tests are shown in Table 1. It was found this time that there existed many longitudinal cracks on prepeg Q.

## COMPARISON EXAMPLE 4

The same procedure as Example 12 was used to produce prepreg R having a fiber content of 50 % and weighing 150 g/m$^2$ except that the reinforcing sheet was not used, and the prepreg R was then cut off to obtain a specimen 10 meters in length and was inspected whether or not there existed longitudinal cracks along fibers.

Structure of prepreg R used in the tests and results of the above tests are shown in Table 1. It was found that there existed no longitudinal cracks on prepeg R.

Generally, as spacing between adjacent continuous fibers becomes larger, longitudinal cracks tend to develop. However, the prepreg produced according to the present invention would not develop longitudinal cracks even with wider spacing of adjacent continuous fibers without impairing characteristics of prepreg. Thus, prepreg having light weight per unit surface can be manufactured.

The strength of laminate structures manufactured using prepregs of the present invention will be explained in detail hereinafter with reference to the following examples and comparison examples.

EXAMPLE 15

Prepreg A manufactured in Example 1 was cut to provide 16 sheets of specimen having a length of 200 mm. One prepreg A specimen was placed in contact with the other, and the two adjacent prepregs were stacked in such a manner that the fiber direction of the first prepreg was perpendicular to that of the second prepreg. Then, the stacked prepregs were disposed between two polyimide films and placed between two hot plates heated at 240°C, preheated at a pressure of 0.5 kg/cm$^2$ for 5 minutes, relieved of pressure, placed between two hot plates heated at 60°C, cooled at a pressure of 5 kg/cm$^2$ for 5 minutes to produce a laminate structure. The laminate structure thus produced was then trimmed on its circumference, and was cut off to provide a square article sized 180 mm X 180 mm, which was then cut off to provide rectangular specimens having a width of 25 mm and a length of 180 mm. These specimens were numbered 1 to 6 in order and subjected to bending tests in accordance with JIS K - 7203. The ratio of specimen thickness to support spacing was 1 : 32.

Results of the tests are shown in Table 2, according to which the values of standard deviation are small enough to verify that any specimen has approximately the same strength, and the laminate structure thus obtained has been found to be uniform in strength throughout the surface.

EXAMPLE 16

16 sheets of prepreg A manufactured in Example 1 were divided into 2 sets of 8 sheets. Then, 2 sets of specimen were produced by stacking one specimen placed in contact with the other in such a manner that the fiber direction of the first prepreg was perpendicular to that of the second prepreg, leaving surface materials not in contact with any prepreg sheet; heating and compressing the laminate thus obtained. The specimens were then laminated in such a way that the glass-fiber direction of the specimen having a surface material exposed on the surface was in agreement with that of other specimens and that one surface on which the reinforcing sheet was exposed was placed in contact with the other surface on which the reinforcing sheet was not exposed. Then, these were deposited firmly as in Example 15 to produce rectangular laminate structures, which were subsequently subjected to bending tests as in Example 15.

Results of the tests are shown in Table 2, according to which the values of standard deviation are small enough to verify that any specimen has approximately the same strength, and the laminate structure thus obtained has been found to be uniform in strength throughout the surface.

EXAMPLE 17

A laminate structure was produced using preprerg C according to the same method as in Example 16 to produce rectangular laminate structures, which were subsequently subjected to bending tests as in Example 15.

Results of the tests are shown in Table 2, according to which the values of standard deviation are small enough to verify that any specimen has approximately the same strength, and the laminate structure thus obtained has been found to be uniform in strength throughout the surface.

EXAMPLE 18

A laminate structure was produced using prepreg H according to the same method as in Example 16 to produce rectangular specimens of laminate structures, which were subsequently subjected to bending tests as in Example 15.

Results of the tests are shown in Table 2, according to which the values of standard deviation are small enough to verify that any specimen has approximately the same strength, and the laminate structure thus obtained has been found to be uniform in strength throughout the surface.

### EXAMPLE 19

A laminate structure was produced using prepreg I according to the same method as in Example 16 to produce rectangular specimens of laminate structures, which were subsequently subjected to bending tests as in Example 15.

Results of the tests are shown in Table 2, according to which the values of standard deviation are small enough to verify that any specimen has approximately the same strength, and the laminate structure thus obtained has been found to be uniform in strength throughout the surface.

### EXAMPLE 20

A laminate structure was produced using prepreg L according to the same method as in Example 16 to produce rectangular specimens of laminate structures, which were subsequently subjected to bending tests as in Example 15.

Results of the tests are shown in Table 2, according to which the values of standard deviation are small enough to verify that any specimen has approximately the same strength, and the laminate structure thus obtained has been found to be uniform in strength throughout the surface.

### COMPARISON EXAMPLE 5

A laminate structure was produced using prepreg O according to the same method as in Example 15 to produce rectangular specimens of laminate structures, which were subsequently subjected to bending tests as in Example 15.

Results of the tests are shown in Table 2, according to which the values of standard deviation are large because of scattering of measured values for each specimen, and the laminate structure thus obtained has been found to be varied in strength throughout the surface.

### COMPARISON EXAMPLE 6

A laminate structure was produced using prepreg P according to the same method as in Example 15 to produce rectangular specimens of laminate structures, which were subsequently subjected to bending tests as in Example 15.

Results of the tests are shown in Table 2, according to which the values of standard deviation are large because of scattering of measured values for each specimen, and the laminate structure thus obtained has been found to be varied in strength throughout the surface.

### COMPARISON EXAMPLE 7

A laminate structure was produced using prepreg R according to the same method as in Example 15 to produce rectangular specimens of laminate structures, which were subsequently subjected to bending tests as in Example 15.

Results of the tests are shown in Table 2, according to which the values of standard deviation are large because of scattering of measured values for each specimen, and the laminate structure thus obtained has been found to be varied in strength throughout the surface.

Generally, in laminate structures as obtained by laminating conventional prepregs under heat and pressure, strengths are not uniform throughout the surface because fibers are likely to be distorted during their production processes. However, in laminate structures of the present invention, neither distortion of fibers nor unevenness in strength occurs because the reinforcing sheet firmly holds continuous fibers.

The strength of three-dimensional articles using laminate structures of the present invention will be explained in detail hereinafter.

### EXAMPLE 21

Prepreg B manufactured in Example 2 was cut to provide 16 sheets of specimen having a length of 200 mm. One prepreg 3 specimen was placed in contact with the other, and the two adjacent prepregs were stacked in such a manner that the fiber direction of the first prepreg was perpendicular to that of the second prepreg. Then, the laminated prepregs were disposed between two polyimide films and placed between two hot plates heated at 240°C, preheated under a pressure of 0.5 kg/cm² for 5 minutes, relieved of pressure, placed in a mold that had been heated at 60 °C and were designed so as to allow an inverted U shape product to be produced, pressed at a pressure of 5 kg/cm² for 5 minutes and cooled to produce a laminate structure article 6 as shown in Fig. 2.

The article 6 thus produced was cut along a cutting line 62 to cut off 6 pieces of specimen of 15 mm width 100 mm length from a connecting section 60 and side walls 61 respectively, which were then subjected to bending tests as in Example 15. Averages and standard deviations in strengths were calculated for respective sections.

Results of the tests conducted on the articles used are shown in Table 3, according to which the values of standard deviation are so small that a difference in strength between the connecting section 60 and side walls 61 is within a scope of experimental errors. Therefore, the article 6 has been found to be uniform in strength throughout the body.

### EXAMPLE 22

16 sheets of prepreg B manufactured in Example 2 were divided into 2 sets each composed of 8 sheets. Then, 2 sets of specimen were produced by stacking one specimen placed in contact with the other in such a manner that the fiber direction of the first prepreg was perpendicular to that of the second prepreg, leaving surface materials not in contact with any reinforcing sheet, heating, and pressing the laminate thus obtained. The specimens were then laminated in such a way that the glass-fiber direction of the specimen having a surface material exposed on the surface was in agreement with that of other specimens and that one surface on which the reinforcing sheet was exposed was placed in contact with the other surface on which the reinforcing sheet was not exposed. Then, these were formed as in Example 21 to produce a three-dimensional articles, which were subsequently subjected to bending tests as in Example 21.

Results of the tests conducted on the articles used are shown in Table 3, according to which the values of standard deviation are so small that the article 6 has only a small difference in strength between the connecting section and side walls that can be attributed to experimental errors. Therefore, the article 6 has been found to be uniform in strength throughout the body.

### EXAMPLE 23

Prepreg F manufactured in Example 6 was laminated to produce an article as in Example 22, on which bending tests were subsequently conducted as in Example 21.

Results of the tests conducted on the articles used are shown in Table 3, according to which the values of standard deviation are so small that the article 6 has only a small difference in strength between the connecting section and side walls that can be attributed to experimental errors. Therefore, the article 6 has been found to be uniform in strength throughout the body.

### EXAMPLE 24

Prepreg G manufactured in Example 7 was laminate3 to produce an article as in Example 22, on which bending tests were subsequently conducted as in Example 21.

Results of the tests conducted on the articles used are shown in Table 3, according to which the values of standard deviation are so small that the article 6 has only a small difference in strength between the connecting section and side walls that can be attributed to experimental errors. Therefore, the article 6 has been found to be uniform in strength throughout the body.

### EXAMPLE 25

Prepreg H manufactured in Example 8 was laminated to produce an article as in Example 22, on which bending tests were subsequently conducted as in Example 21.

Results of the tests conducted on the articles used are shown in Table 3, according to which the values of standard deviation are so small that the article 6 has only a small difference in strength between the connecting section and side walls that can be attributed to experimental errors. Therefore, the article 6 has been found to be uniform in strength throughout the body.

### EXAMPLE 26

Prepreg I manufactured in Example 9 was laminated to produce an article as in Example 22, on which bending tests were subsequently conducted as in Example 21.

Results of the tests conducted on the articles used are shown in Table 3, according to which the values of standard deviation are so small that the article 6 has only a small difference in strength between the connecting section and side walls that can be attributed to experimental errors. Therefore, the article 6 has been found to be uniform in strength throughout the body.

EXAMPLE 27

Prepreg L manufactured in Example 12 was laminated to produce an article as in Example 22, on which bending tests were subsequently conducted as in Example 21.

Results of the tests conducted on the articles used are shown in Table 3, according to which the values of standard deviation are so small that the article 6 has only a small difference in strength between the connecting section and side walls that can be attributed to experimental errors. Therefore, the article 6 has been found to be uniform in strength throughout the body.

EXAMPLE 28

Using glass fibers as monofilaments and PP as thermoplastic resin, a conventional prepreg having a width of 200 mm and a fiber content of 50 % and weighing 240 $g/m^2$ was produced and was referred to as prepreg X. The prepreg X was cut to provide 17 sheets each having a length of 200 mm. Further, 16 reinforcing sheets sized 200 mm square and made of PET non-woven fabrics weighing 10 $g/m^2$ were prepared. Then, sheets of prepreg X and non-woven fabrics were arranged alternately, placed in such a way that the fiber direction of one sheet of prepreg X adjacent to the other with the non-woven fabric being placed between one sheet and the other sheet was perpendicular to that of the other sheet, and then laminated. Further, using the same procedures to form an article as in Example 22, these were laminated to form an article, on which bending tests were subsequently conducted as in Example 21.

Structure of prepreg X used in these tests is shown in Table 4, and results of the tests conducted on the articles used are shown in Table 3, according to which the values of standard deviation are so small that this article has only a small difference in strength between the connecting section and side walls that can be attributed to experimental errors. Therefore, this article has been found to be uniform in strength throughout the article.

EXAMPLE 29

Using the same procedures as in Example 28, a conventional prepreg weighing 250 $g/m^2$ was produced and was referred to as prepreg Y. The prepreg Y and prepreg B manufactured in Example 2 were cut off to provide 8 sheets each having a length of 200 mm. Then, sheets of prepreg B and prepreg Y were arranged alternately, placed in such a way that the fiber direction of one sheet of prepreg adjacent to other prepreg sheet was perpendicular to that of the other sheet, and then laminated so that the reinforcing sheets were not exposed on the surface. Further, using the same procedures to form an article as in Example 22, these were laminated to form an article, on which bending tests were subsequently conducted as in Example 1.

Structure of prepreg Y used in these tests is shown in Table 4, and results of the tests conducted on the articles used are shown in Table 3, according to which the values of standard deviation are so small that this article has only a small difference in strength between the connecting section and side walls that can be attributed to experimental errors. Therefore, this article has been found to be uniform in strength throughout the body.

COMPARISON EXAMPLE 8

Prepreg Y produced in Example 29 was laminated to form an article using the same procedures as in Example 22, on which bending tests were subsequently conducted as on the article in Example 1.

Results of the tests on the article used in these tests are shown in Table 3, according to which the values of standard deviation are large because of scattering of measured values for each specimen and this final article thus formed has been found to be varied in strength throughout the body.

Generally, when final articles as obtained by conventional prepregs undergo deformation, strengths are impaired to result in non-uniformity throughout the body because orientation of continuous fibers are likely to be distorted during their deformation processes. However, in there-dimensional articles of the present invention, no strength is impaired because orientation of continuous fibers is not distorted even if the continuous fibers are folded by deforming the laminate structure itself in three dimensions. The reinforcing sheets between which continuous fibers has been placed firmly can allow the laminate structure itself to be deformed three-dimensionally under deformation stresses.

The capability of other adhesives that are applied to the laminate structures of the present invention will be explained in detail hereinafter.

EXAMPLE 30

An adhesive which was commercially available from Mitsui Toatsu Chemical Co. Ltd. under a trade name of Structbond XA - 7175 was applied to the surface on which a reinforcing sheet made of laminate structure obtained by laminating sheets of prepreg B of Example 15 is exposed. Then, an urethane foam sheet to one surface of which a surface-decorating material had been adhered was bonded with said laminate structure on the other surface of the urethane foam sheet.

An attempt was made to tear off an adhesive interface between this laminate structure and decorating material but only failed. Instead, an interface between the urethane foam sheet and surface-decorating material was ripped off without success in tearing the adhesive interface between said laminate structure and said decorating material. Thus, it was found that there existed a strong bonding strength in the adhesive interface.

COMPARISON EXAMPLE 9

An adhesive was applied to the surface of a laminate structure produced by laminating sheets of prepreg Y of Comparison Example 1 using the same procedures as in Example 30. Then, an urethane foam surface side of a decorating plate was bonded with said laminate structure.

An attempt was made to tear off an adhesive interface between this laminate structure and decorating plate only to find the interface to be torn off. Thus, it was found that there existed only a weak bonding strength in the adhesive interface.

Generally, when other materials are bonded with adhesives, in conventional laminate structures without reinforcing sheets, the bonding surface of the laminate structure is a smooth resin layer and there is no strong affinity between the adhesive and the surface, resulting in poor bonding. However, in laminate structures of the present invention, the reinforcing sheet disposed on the bonding surface has roughened surface with fine dimples. Therefore, when adhesives are applied to the bonding surface of the laminate structure, the adhesives will come to fill those small holes or crevices on the surface, displaying affinity to the surface, to attain enhanced adhesive capability. Accordingly, the other material can be firmly adhered to the laminate structures of the present invention.

Table 1

| Examples and Comparison Examples | Types of Prepregs and Fiber-Reinforced Resin Sheets | Raw Materials of Fiber-Reinforced Resin Sheets | | | Specifications of Reinforcing Sheets | | | Specifications | | | Results of Inspection |
|---|---|---|---|---|---|---|---|---|---|---|---|
| | | Continuous Fibers | Fiber Content % by volume | Resins | Forms | Material | Unit Weight (g/m²) | Position of Reinforcing Sheet | Spacing of Continuous Fibers | Weight (g/m²) | Longitudinal Cracks Yes or No |
| Example 1 | A | Glass Fiber | 50 | PP | NWF* | PET | 10 | One Side | 0 | 350 | No |
| Example 2 | B | Glass Fiber | 50 | PP | NWF* | PET | 10 | One Side | 0 | 250 | No |
| Example 3 | C | Glass Fiber | 50 | PP | NWF* | PET | 10 | One Side | 0 | 200 | No |
| Example 4 | D | Glass Fiber | 50 | PP | NWF* | PET | 10 | One Side | 0 | 100 | No |
| Example 5 | E | Glass Fiber | 50 | PP | NWF* | PET | 10 | One Side | 5 | 50 | No |
| Example 6 | F | Glass Fiber | 80 | PP | NWF* | PET | 10 | One Side | 0 | 250 | No |
| Example 7 | G | Glass Fiber | 40 | PP | NWF* | PET | 10 | One Side | 0 | 250 | No |
| Example 8 | H | Glass Fiber | 50 | PA6 | NWF* | PET | 10 | One Side | 0 | 200 | No |
| Example 9 | I | Glass Fiber | 50 | PP | Net | PA6 | 10 | One Side | 0 | 200 | No |
| Example 10 | J | Glass Fiber | 50 | PP | Paper | Pulp | 20 | One Side | 0 | 250 | No |
| Example 11 | K | Glass Fiber | 50 | PP | Net | Stainless | 360 | One Side | 0 | 610 | No |
| Example 12 | L | Carbon Fiber | 50 | PEEK | Mat | Carbon Fiber | 30 | One Side | 0 | 150 | No |
| Example 13 | M | Glass Fiber | 50 | PP | NWF* | PET | 10 | Both Sides | 0 | 250 | No |
| Example 14 | N | Glass Fiber | 50 | PP | NWF* | PET | 10 | Both Sides | 0 | 250 | No |
| | | | | | NWF* | PA6 | 20 | | | | No |
| Comparison Example 1 | O | Glass Fiber | 50 | PP | | | | . | 0 | 350 | No |
| Comparison Example 2 | P | Glass Fiber | 50 | PP | | | | | 0 | 200 | No |
| Comparison Example 3 | Q | Glass Fiber | 50 | PP | | | | | 5 | 50 | Many Cracks Occurred |
| Comparison Example 4 | R | Glass Fiber | 50 | PEEK | | | | | 0 | 150 | No |

* Non-Woven Fabrics

Table 2

| Examples and Comparison Examples | Types of Prepregs used | Number of Specimens | | | | | | Average | Standard Deviation |
|---|---|---|---|---|---|---|---|---|---|
| | | 1 | 2 | 3 | 4 | 5 | 6 | | |
| Example 15 | A | 38.2 | 38.1 | 37.2 | 37.6 | 37.8 | 37.4 | 37.7 | 0.39 |
| Example 16 | A | 38.5 | 37.3 | 37.9 | 38.3 | 37.5 | 38.0 | 37.9 | 0.40 |
| Example 17 | C | 39.2 | 39.8 | 40.1 | 39.2 | 40.3 | 38.9 | 39.6 | 0.56 |
| Example 18 | H | 48.5 | 47.9 | 48.3 | 47.1 | 47.5 | 47.8 | 47.9 | 0.51 |
| Example 19 | I | 39.5 | 39.1 | 40.3 | 40.5 | 39.2 | 39.4 | 39.7 | 0.59 |
| Example 20 | L | 97.6 | 98.3 | 98.9 | 97.8 | 98.2 | 98.5 | 98.2 | 0.47 |
| Comparison Example 5 | O | 35.2 | 36.8 | 38.2 | 37.9 | 37.2 | 34.3 | 36.6 | 1.54 |
| Comparison Example 6 | P | 36.1 | 37.3 | 39.5 | 40.3 | 38.2 | 35.8 | 37.8 | 1.81 |
| Comparison Example 7 | R | 79.2 | 83.2 | 97.9 | 98.3 | 82.5 | 77.8 | 86.5 | 9.20 |

Unit : kg/mm²

EP 0 637 510 A1

Table 3

| Examples and Comparison Examples | Types of Prepregs used | Position of Specimens | | | |
|---|---|---|---|---|---|
| | | Average | Standard Deviation | Average | Standard Deviation |
| Example 21 | B | 37.5 | 0.43 | 37.3 | 0.48 |
| Example 22 | B | 36.9 | 0.41 | 37.1 | 0.42 |
| Example 23 | F | 52.5 | 0.39 | 52.9 | 0.41 |
| Example 24 | G | 27.7 | 0.45 | 27.5 | 0.48 |
| Example 25 | H | 37.5 | 0.41 | 37.0 | 0.45 |
| Example 26 | I | 43.5 | 0.49 | 44.1 | 0.47 |
| Example 27 | L | 98.5 | 0.51 | 97.9 | 0.61 |
| Example 28 | X | 36.5 | 0.42 | 36.1 | 0.49 |
| Example 29 | Y | 37.1 | 0.41 | 36.4 | 0.45 |
| | B | | | | |
| Comparison Example 8 | Y | 33.5 | 1.95 | 29.5 | 2.57 |

Unit : kg/mm 2

EP 0 637 510 A1

Table 4

Raw Materials and Specifications

| Types of Fiber-Reinforced Resin Sheet | Continuous Fibers | Fiber Content (% by volume) | Resin | Weight (g/m²) |
|---|---|---|---|---|
| Resin Plate X | Glass Fiber | 50 | PP | 240 |
| Resin Plate Y | Glass Fiber | 50 | PP | 250 |

EFFECTS OF THE INVENTION

Since the prepregs according to the present invention, laminate structures using said prepregs, articles using said laminate structures are structured as mentioned above, there is no distortion of continuous fibers in prepregs so that partial variations in strength can be prevented. In addition, three-dimensional shaping can be carried out without impairing strength. Further, weight per unit area can be reduced as required without impairing desirable performance characteristics. Moreover, the materials of the invention can be bonded to other materials without applying any special surface treatment.

**Claims**

1. A prepreg comprising at least one fiber-reinforced resin sheet obtained by impregnating thermoplastic resin into continuous fibers aligned in one direction on a plane and at least one layer of porous and flexible reinforcing sheet which was laminated with said at least one fiber-reinforced resin sheets.

2. Prepreg in accordance with claim 1 wherein the fiber reinforced resin sheet has a continuous fiber content not less than 40 % and not more than 80 % by volume.

3. Prepreg in accordance with claim 1 or 2 wherein continuous fibers are obtained by bundling 100 to 20,000 monofilaments having a diameter of 3 to 25 micrometers, and aligning them in one direction.

4. Prepreg in accordance with claims 1 to 3 wherein the continuous fibers are orderly aligned so that spacing between adjacent fibers bundle ranges 0 to 100 mm, and are constrained with reinforcing sheets so that spacing between each fiber bundle is kept constant.

5. Prepreg in accordance with claim 1 to 3 wherein the continuous fibers are orderly aligned so that spacing between adjacent fibers bundle ranges 0 to 30 mm, and are constrained with reinforcing sheets so that spacing between each fiber bundle is kept constant.

6. Prepreg in accordance with any one of claims 1 to 5 wherein the melt viscosity of molten thermoplastic resin ranges 1,000 poises to 5,000 poises at a share rate of 1/ sec - 100/ sec.

7. Laminate structure obtainable by stacking an appropriate number of prepregs in accordance with any one of claims 1 to 6 while changing alignment directions of fibers successively, followed by heating and compressing said prepregs simultaneously.

8. Laminate structure in accordance with claim 7 characterized in that a reinforcing sheet is exposed on at least one surface of said laminate structures.

9. Laminate structure obtainable by stacking an appropriate number of fiber-reinforced resin sheets in which thermoplastic resin have been impregnated into the continuous fibers aligned in one direction on a plane over porous and flexible reinforcing sheets alternately while changing alignment directions of fibers successively, followed by heating and compressing said laminates simultaneously.

10. Laminate structure in accordance with claim 9 obtainable by stacking the prepregs so that a reinforcing sheet is exposed on at least one surface of said laminate structure, followed by heating and compressing them.

11. Laminate structure obtainable by stacking an appropriate number of the prepregs in accordance with any one of claims 1 to 6, and the fiber-reinforced resin sheets in which thermoplastic resin have been impregnated into continuous fibers aligned in one direction on a plane with alignment directions of fibers be changed successively and arranging the prepregs and the sheets in an appropriate order, followed by heating and compressing them.

12. Laminate structure in accordance with claim 11 obtainable by stacking the prepregs so that a reinforcing sheet is exposed on at least one surface of said laminate structure, followed by heating and compressing.

13. Laminate structure obtainable by stacking an appropriate number of the prepregs in accordance with any one of claims 1 to 6, the fiber-reinforced resin sheets in which thermoplastic resin have been impregnated into continuous fibers aligned in one direction on a plane, and the porous and flexible reinforcing sheets with alignment directions of fibers be changed successively, and arranging the prepregs, fiber-reinforced resin sheets, and reinforcing sheets in an appropriate order, followed by heating and compressing.

14. Laminate structure in accordance with claim 13 obtainable by stacking the prepregs so that a reinforcing sheet is exposed on at least one surface of said laminate structure, followed by heating and compressing them.

15. Prepreg or laminate structure in accordance with any one of claims 1 to 14 wherein a decorative surface material is laminated on at least one surface thereof.

16. Prepreg or laminate structure in accordance with any one of claims 1 to 15 wherein said reinforcing sheets are non-woven fabrics, woven fabrics, or nets, and materials thereof are synthetic resin fibers, inorganic fibers, metallic fibers or mixtures thereof.

17. Prepreg or laminate structure in accordance with any one of claims 1 to 15 wherein said reinforcing sheets are made of synthetic resin sheets or metallic foils, and are obtained by punching the same.

18. Laminate structure article obtained by heating a laminate structure in accordance with any one of claims 7 to 15 to a temperature higher than the fluidal temperature of the thermoplastic resin and then by stamping in press molds.

19. A method for the production of a laminate structure article in which a laminate structure in accordance with claims 7 to 15 is heated to a temperature higher than the fluidal temperature of the thermoplastic resin and then stamped in a press mold.

# FIG. 1

# FIG.2

## EUROPEAN SEARCH REPORT

European Patent Office

Application Number

EP 94 30 5848

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 500 990 (E. I. DU PONT DE NEMOURS & CO.)<br><br>* page 2, line 3 - page 4, line 9; figure 1 * | 1,2, 7-14,16, 18,19 | B32B5/28<br>B29C70/10 |
| A | | 3-6,15, 17 | |
| X | EP-A-0 122 024 (SECRETARY OF STATE FOR DEFENCE IN HER BRITANNIC MAJESTY'S GOVERNMENT)<br>* page 1, line 12 - line 15 *<br>* page 2, line 13 - line 16 *<br>* page 4 * | 1 | |
| Y | | 7,9,11, 13,18 | |
| Y | EP-A-0 417 929 (IMPERIAL CHEMICAL INDUSTRIES PLC)<br>* page 2, line 17 - line 19 * | 7,9,11, 13,18 | |
| X | US-A-4 532 169 (CARLEY)<br>* column 3, line 59 - column 5, line 24 *<br>* column 11, line 37 - column 12, line 5; claims 23,25,29,31,32,43,48 * | 1 | TECHNICAL FIELDS SEARCHED (Int.Cl.6)<br><br>B32B<br>B29C |
| A | | 2-19 | |
| L | EP-A-0 167 303 (E.I. DU PONT DE NEMOURS AND CO)<br>* page 2, line 31 - page 3, line 7 *<br>* page 13, line 25 - line 28; claim 7 *<br>& US-A-4 640 861 | 3,6 | |

The present search report has been drawn up for all claims

| Place of search | Date of completion of the search | Examiner |
|---|---|---|
| THE HAGUE | 21 November 1994 | Ibarrola Torres, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)